## Europäisches Patentamt

## European Patent Office

## Office européen des brevets

(11) Veröffentlichungsnummer: **0 477 745 B1**

# EUROPÄISCHE PATENTSCHRIFT

(45) Veröffentlichungstag der Patentschrift: **14.09.94**

(21) Anmeldenummer: **91115806.1**

(22) Anmeldetag: **18.09.91**

(51) Int. Cl.⁵: **E02B 8/06**, E03F 5/10, G01F 1/00

(54) **MESSEINRICHTUNG MIT ÜBERLAUFMESSSCHWELLE.**

(30) Priorität: **25.09.90 DE 4030249**
**15.03.91 DE 4108360**

(43) Veröffentlichungstag der Anmeldung:
**01.04.92 Patentblatt 92/14**

(45) Bekanntmachung des Hinweises auf die
Patenterteilung:
**14.09.94 Patentblatt 94/37**

(84) Benannte Vertragsstaaten:
**AT BE CH DE DK ES FR GB IT LI NL SE**

(56) Entgegenhaltungen:
**FR-A- 822 860**
**US-A- 1 499 956**
**US-A- 2 103 600**

**INSTRUMENT PRACTICE Bd. 17, Oktober
1963, Seiten 1065 - 1070; J.T. MILLER: 'FLOW
MEASUREMENTS IN OPEN CHANNELS'**

(73) Patentinhaber: **Oskar Vollmar GmbH**
**König-Karl-Strasse 14**
**D-70372 Stuttgart (DE)**

(72) Erfinder: **Fahrner, Heinz**
**Lauchersfeld 18**
**W-7061 Kaisersbach-Ebni (DE)**
Erfinder: **Peter, Günther, Dr.Dipl.-Ing.**
**Rennebogen 41**
**W-3042 Magdeburg (DE)**

(74) Vertreter: **Grosse, Rainer, Dipl.-Ing. et al**
**Gleiss & Grosse**
**Patentanwaltskanzlei,**
**Maybachstrasse 6A**
**D-70469 Stuttgart (DE)**

**Beschreibung**

Die Erfindung betrifft eine Meßeinrichtung mit Überlaufmeßschwelle, die ein Kronenprofil aufweist und deren Meßwert von der von der Meßeinrichtung ermittelten Höhe eines Flüssigkeitsspiegels abhängig ist.

Zunehmend werden in Mischwasser-Entwässerungssystemen Regenüberlaufbecken gebaut und betrieben. Ziel dieser Maßnahme ist es, durch die Regenwasserbehandlung den Regenabfluß zum Beispiel zu Kläranlagen so zu begrenzen, daß deren Wirkungsgrad nicht unzulässig sinkt und daß gleichzeitig eine stoßweise erfolgende Belastung von Vorflutern, zum Beispiel Flüssen und Gewässern, in vertretbaren Grenzen bleibt. Bis heute ist jedoch vielerorts der Wirkungsgrad und das Entlastungsverhalten derartiger Bauwerke nicht hinreichend bekannt. Die Auflagen der Aufsichtsbehörden einzelner Länder fordern daher (schon bei der Baugenehmigung) Becken und Regenüberläufe mit Meßeinrichtungen zu versehen, um eine Erfassung der Jahres- Entlastungsmenge zu ermöglichen. Mittelfristig ist überdies zu erwarten, daß auch an Regenüberlaufbecken und eventuell auch an exponierten Regenüberläufen eine Meßdatenerfassung zu Nachweiszwecken generell einzurichten ist.

Für die Erfassung von Entlastungsmengen ist es bekannt, Überlaufschwellen bzw. Überlaufmeßschwellen einzusetzen, bei denen oberwasserseitig eine Wasserstandsmessung erfolgt. Insbesondere wird die Höhe des Wasserstandes oberhalb der Krone der Überlaufschwelle gemessen und aus dieser Meßgröße die Überlaufmenge ermittelt. Diese höhenabhängige Überlaufmessung ist besonders wirtschaftlich, jedoch bei den bekannten Einrichtungen mit vielfältigen Meßfehlern behaftet. Alternativ können für die Entlastungsmessung auch induktive Durchflußmesser eingesetzt werden. Diese induktiven Durchflußmesser sind Meßgeräte mit den zweifellos geringsten Meßfehlern. In die Entlastungsleitung, die in aller Regel als Freispiegelleitung ausgeführt ist, muß dann jedoch dieses Meßgerät in Verbindung mit einem gedükerten Meßrohr eingesetzt werden, weil ein ordnungsgemäßer Betrieb nur bei Meßrohrvollfüllung erreicht wird. Derartige Meßbauwerke erfordern jedoch extrem hohe Investitionskosten, so daß aus wirtschaftlichen Erwägungen in der Regel davon Abstand genommen werden muß. Diese Lösung bleibt nur außergewöhnlichen Betriebspunkten vorbehalten.

Insofern befaßt sich die Erfindung mit der höhenabhängigen Überlaufmessung.

Aus der Literaturstelle "Instrument Practice", Bd. 17, Okt. 1963, S. 1065-1070, MILLER "Flow measurements in open channels" ist eine Meßeinrichtung mit Überlaufmeßschwelle der eingangs genannten Art bekannt. Es werden Überlaufmeßschwellen verschiedener Form gezeigt, die jedoch allesamt keine hinreichend präzise Messung gestatten.

Aufgabe der Erfindung ist es daher, eine Meßeinrichtung mit Überlaufmeßschwelle anzugeben, die mit einfachen und kostengünstigen Mitteln eine weitestgehend fehlerfreie Überlaufmessung ermöglicht.

Diese Aufgabe wird erfindungsgemäß dadurch gelöst, daß sich das Kronenprofil aus der Kombination einer Standardprofilkrone und einer sich an deren Abflußrücken anschließenden, waagerecht verlaufenden, sich bis zu einer Wehrrückwand erstreckenden Breit-Wehrkrone zusammensetzt, wobei die Oberflächenebene der Breit-Wehrkrone unterhalb des höchsten Punktes der Standardprofilkrone liegt.

Diese erfindungsgemäße, besondere Profilform der Überlaufschwelle stellt eine optimierte Schwellenform da, die gleichermaßen für die Aufgabe der Entlastung als auch einer Meßwerterfassung bestens geeignet ist. Sie ist eine Kombination zweier Überfallformen, die gemäß der praktischen Hydraulik als "Standardprofil" und als "breitkroniges Wehr" zu bezeichnen ist. Bei der erfindungsgemäßen Überlaufschwelle stellen sich transparente hydraulische Verhältnisse ein. Es liegt eine eindeutige, hydraulische Kennlinie vor, wobei sich stets ein stabiler Abflußstrahl innerhalb weiter Grenzen einstellt. Dies erfolgt unabhängig von der Belüftungssituation des Abflußstrahls. Bei dem erfindungsgemäßen Überlaufschwellenprofil ist es problemlos möglich, daß das Unterwasser über die Höhe der Wehrkrone ansteigt, ohne daß dabei der unvollkommene Überfall beginnt. Dies unterscheidet sich somit wesentlich von bekannten Überlaufschwellenprofilen, da zum Beispiel bei scharfkantigen Wehren die Beeinflussung des Oberwassers durch das Unterwasser bereits auftritt, bevor das Unterwasser die Wehrkrone erreicht hat. Mithin läßt die erfindungsgemäße Überlaufschwelle hohe Rückstauebenen zu. Ist sie mit einem Speicherbauwerk, zum Beispiel Regenüberlaufbecken, kombiniert, so läßt sich dessen Beckenvolumen in einem vergrößerten Bereich ausnutzen. Dies deshalb, weil der Überfallbeiwert (auf den im nachfolgenden noch näher eingegangen wird) bei dem erfindungsgemäßen Überlaufschwellenprofil mehr an dem Wert "1" liegt, so daß gegenüber bekannten Schwellen mit einer kleineren Überfallhöhe bei gleicher Abflußmenge gearbeitet werden kann. Diese Überfallhöhe ist jedoch in der Regel durch die baulichen Gegebenheiten begrenzt, um der Gefahr einer Wasseransammlung zum Beispiel in den Kellern von oberhalb liegenden Häusern zu begegnen. Da sich erfindungsgemäß eine kleinere Überfallhöhe ergibt, ergibt sich bei Ausnutzung des zulässigen Bereichs gegenüber den bekannten Einrichtungen ein Reservevolumen, das heißt, bei gleicher Beckenausbildung kann die erfindungsgemäße Überlaufschwelle höher angeordnet werden, so daß insgesamt ein größeres Beckenvolumen zur Verfügung steht. Andererseits ist es jedoch auch möglich, ein Becken mit geringerer Tiefe zu bauen, wobei sich dennoch -gegenüber bekannten Überlaufschwellengleiche Verhältnisse einstellen. Diese kleinere Beckentiefe bei gleichem Volumen senkt jedoch erheblich die Baukosten. Insbesondere ist es auch möglich, die erfindungsgemäße Überlaufschwelle in industrieller Fertigung herzustellen. Sie kann beispielsweise aus Kunststoff, insbesondere glasfaserverstärktem Kunststoff (GFK) hergestellt und auf die zumeist aus Beton hergestellte Rohschwelle aufgesetzt und dort befestigt werden.

Vorstehend wurde bereits ausgeführt, daß sich stets ein stabiler Abflußstrahl innerhalb weiter Grenzen der Überfallhöhe einstellt. Während sich bei bekannten Überlaufschwellen in bestimmten Betriebspunkten Wirbel beziehungsweise Schwingungen einstellen, bleibt der Abflußstrahl bei der erfindungsgemäßen Überlaufschwelle stabil. Dies auch deshalb, weil keine Anhebung des Unterwasserstrahls in Abhängigkeit weiter Grenzen (ausgehend von der Entwurfsüberfallhöhe) erfolgt, wie dies oftmals bei bekannten Schwellen der Fall ist. Bei der erfindungsgemäßen Überlaufschwelle ist auch eine besonders einfache Auslegung im Zusammenhang mit einer Tauchwand möglich, da der störende Einfluß der Tauchwand auf die höhenabhängige Entlastungsmessung nach hydraulischen Gesetzen bestimmbar ist. Insofern kann dies berücksichtigt werden und führt dann nicht zu einer Meßwertverfälschung.

Nach einer Weiterbildung der Erfindung ist der Übergang von dem Abflußrücken zur Oberflächenebene der Breit-Wehrkrone stetig, insbesondere als konkave Krümmung, ausgebildet. Hierdurch ist eine wirbelfreie Stromfädenausbildung bei geringer Reibung und gewünschter Druck- und Geschwindigkeitsverteilung gewährleistet.

Vorzugsweise weist das Standardprofil oberwasserseitig eine senkrechte Stauwand auf. Unterseitig ist die Breit-Wehrkrone mit einer scharfen Kante versehen. Diese scharfe Kante grenzt vorzugsweise an die senkrechte Wehrrückwand an.

Die Form der Standardprofilkrone ist vorzugsweise derart ausgebildet, daß sie der Nachbildung der Strahlunterseite eines belüfteten scharfkantigen Überfalls entspricht.

Günstig ist es, wenn die Breite der Standardprofilkrone etwa eben so groß ist, wie die Breite der Breit-Wehrkrone.

Vorteilhaft ist es, wenn die Meßeinrichtung oberwasserseitig einen Wasserstandsmesser zur Bestimmung der Überlaufmenge aufweist. Der Wasserstandsmesser erfaßt vorzugsweise die oberwasserseitige Höhe des Wasserstandes oberhalb des höchsten Punktes der Standardprofilkrone. Dies erfolgt in einem Bereich, der noch nicht von der Überlaufschwelle beeinflußt ist. Als Wasserstandsmesser können bekannte Geräte mit Drucksensor, Echolot oder Einperlmessungseinrichtungen verwendet werden. Derartige Meßgeräte bestehen einerseits aus dem Sensor, der den Wasserstand ermittelt und weisen andererseits einen Meßverstärker mit normiertem Signalausgang auf. Nachgeschaltet wird vorzugsweise in der Regel ein Rechner, der das Höhensignal in ein schwellenbezogenes Mengensignal umwandelt. Ein Analogfrequenzzwandler bildet mengenproportionale Impulse zur Ansteuerung eines $m^3$-Zählers. Ferner ist es möglich Registrierschreiber oder -drucker zu installieren, so daß das Entlastungsergebnis protokolliert werden kann. Ferner körnen Fernübertragungseinrichtungen zur Übermittlung der Meßergebnisse vorhanden sein. Vorzugsweise wird die Überlaufmenge nach der Poleni-Formel ermittelt. Diese lautet

$$Q = \frac{2}{3} \mu \sqrt{(2\ g)}\ b\ h^{3/2},$$

wobei $\mu$ der Überfallbeiwert der Überlaufschwelle, g die Erdbeschleunigung, b die Breite der Überlaufschwelle und h der oberwasserseitige Wasserstand oberhalb des höchsten Punktes der Standardprofilkrone ist.

Die Zeichnung veranschaulicht die Erfindung und zwar zeigt:

Figur 1     einen Schnitt durch die erfindungsgemäße Überlaufschwelle und

Figur 2     eine schematische Ansicht der Überlaufschwelle mit Darstellung verschieden hoher Wasserspiegel unter beziehungsweise über der Entwurfsüberfallhöhe.

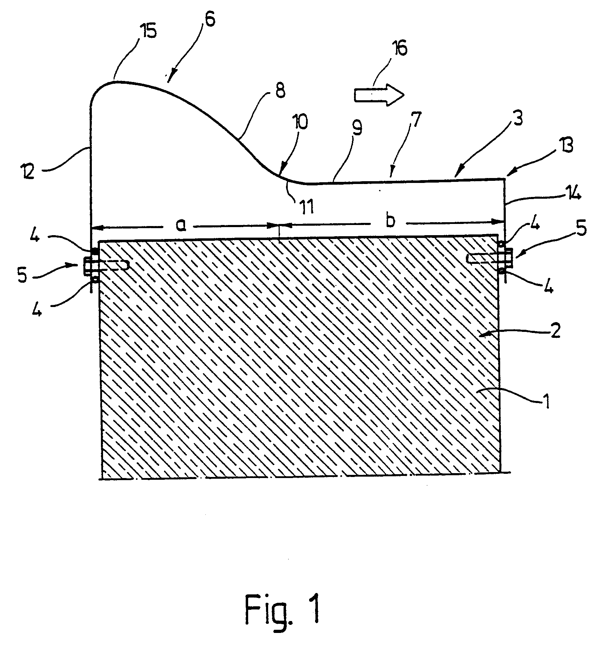

Die Figur 1 zeigt einen Abschnitt 1 einer Roh-Wehrmauer 2, auf die eine Überlaufschwelle 3 aufgesetzt ist. Die Überlaufschwelle 3 ist somit als separates Bauteil gefertigt und wird -z. B. unter Zwischenschaltung von Dichtungen 4- mittels Befestigungsmittel 5 am Kopf der Rohr-Wehrmauer 2 gehalten. Die Erfindung ist jedoch nicht auf eine derartige Ausgestaltung beschränkt, vielmehr beinhaltet sie auch Wehre, bei denen die Wehrkrone nicht mit einer aufsetzbaren, dort befestigten Überlaufschwelle versehen ist, sondern die Überlaufschwelle mit der übrigen Wehrmauer ein einstückiges Teil bildet. Entscheidend ist die besondere Profilform der Überlaufschwelle.

Die Überlaufschwelle 3 setzt sich aus einer Standardprofilkrone 6 und einer Breit-Wehrkrone 7 zusammen. Die Standardprofilkrone 6 weist eine Form auf, die der Nachbildung der Strahlunterseite eines belüfteten, scharfkantigen Überfalls entspricht. Die Form der Breit-Wehrkrone ist -entsprechend der Nomen-

EP 0 477 745 B1

klatur der praktischen Hydraulik- als breitkroniges Wehr zu bezeichnen. Der Abflußrücken 8 der Standardprofilkrone 6 geht stetig in die waagerecht verlaufende Oberflächenebene 9 der Breit-Wehrkrone 7 über. Dieser Übergang 10 ist als stetige, konkave Krümmung 11 ausgebildet. Oberwasserseitig weist die Standardprofilkrone 6 eine senkrechte Stauwand 12 auf. Die Breit-Wehrkrone 7 besitzt unterwasserseitig eine scharfe Kante 13. An diese schließt sich eine senkrechte Wehrrückwand 14 an.

Die Breite a der Standardprofilkrone 6 ist etwa ebensogroß, wie der Breite b der Breit-Wehrkrone 7. Die Oberflächenebene 9 der Breit-Wehrkrone 7 liegt unterhalb des höchsten Punktes 15 der Standardprofilkrone 6.

Der Überlaufschwelle 3 ist eine Meßeinrichtung zur höhenabhängigen Überlaufmessung zugeordnet. Die Abflußmenge des Wehrs der Figur 1 wird nach der Poleni-Formel gemessen. Die Poleni-Formel lautet:

$$Q = \tfrac{2}{3} \mu \sqrt{(2g)} \, b \, h^{3/2}$$

wobei Q die Überlaufmenge, $\mu$ der Überfallbeiwert der Überlaufschwelle 3, g die Erdbeschleunigung, b die Breite der Überlaufschwelle und h der oberwasserseitige Wasserstand oberhalb des höchsten Punktes 15 der Standardprofilkrone 6 ist. Die PoleniFormel stellt somit eine Q/h Beziehung da, mit der auf einfache Weise eine Überlaufmessung möglich ist. Voraussetzung ist allerdings, daß der Überfallbeiwert $\mu$ bekannt ist. Dieser läßt sich aufgrund des erfindungsgemäßen Überlaufschwellenprofils durch Labormessungen besonders einfach und gut bestimmen. Er ist -anders wie bei bekannten Profilformen- im wesentlichen von Einflußgrößen unabhängig, die zu Meßfehlern führen würden.

Hierzu einige Erläuterungen:

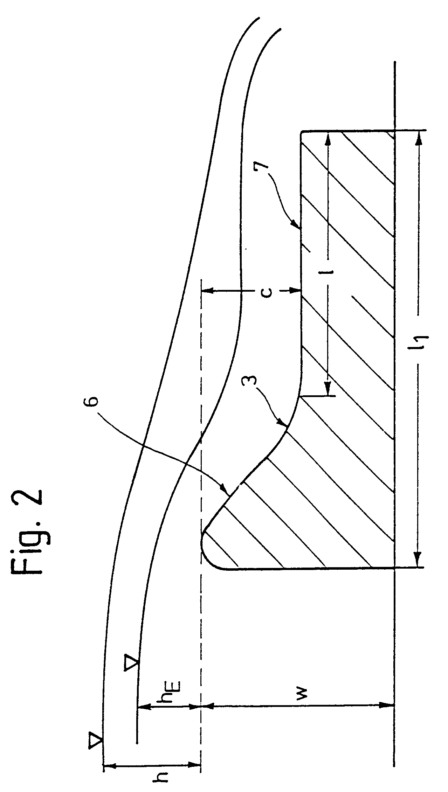

Das Standardprofil der Standardprofilkrone 6 ist -wie erwähnt- die Nachbildung der Strahlunterseite eines belüfteten, scharfkantigen Überfalls. Da für jede Überfallmenge Q eine andere Strahlunterseitenform existiert, wird die erfindungsgemäße Überlaufschwelle auf einen bestimmten Entwurfsfall hin ausgelegt. Hierzu gehören die Entwurfsüberfallmenge $Q_E$ und die Entwurfsüberfallhöhe $h_E$ (vergleiche Figur 2). Bei der genannten Nachbildung erhält man eine Überfallform, die im Entwurfsfall ein druckfreies Profil ergibt, das heißt, entlang des gesamten Wehrrückens herrscht Atmosphärendruck. Für $h < h_E$ drostatische Druck ist. Für $h > h_E$ entsteht ein Unterdruck. Diese Druckverhältnisse bewirken eine Abflußbeschleunigung und somit eine Verbesserung der Abflußleistung. Das Standardprofil ist somit in der Lage eine wesentlich größere Abschlagmenge als andere Wehrformen bei gleicher Überfallhöhe h abzuführen. Die Größe des Unterdrucks nimmt bei steigender Überfallhöhe h zu. Dies kann bei bekannten Überlaufschwellenprofilen, insbesondere bei großen Überfallhöhen h, zur Strahlablösung beziehungsweise zu Kavitationserscheinungen führen. Durch die erfindungsgemäße Kombination eines Standardprofils mit einem breitkronigen Auslauf werden derartige Erscheinungen vermieden. Durch die Ausbildung des horizontal verlaufenden Schwellenteils (Breit-Wehrkrone 7) wird ferner erreicht, daß der Beginn des unvollkommenen Überfalls erst wesentlich später einsetzt. Gleichzeitig wird unter diesen Bedingungen der Überfallbeiwert $\mu$ etwa ab dem 1,5-fachen der Entwurfsüberfallhöhe $h_E$ abnehmen. Die Abhängigkeit des Überfallbeiwerts $\mu$ ergibt sich unter Berücksichtigung aller entscheidenden Einflußgrößen und den hydraulischen Modelgesetzen gemäß nachstehender Beziehung:

$$\mu = f \left( \frac{h}{h_E}, \; \frac{h_E}{w}, \; \frac{c}{h_E}, \; \frac{l}{h_E} \right).$$

Die Strömungsrichtung ist in der Figur 1 mit dem Pfeil 16 dargestellt.

Da die Größe $l_1$ der Wandstärke des Wehrs entspricht, wobei diese in einem bevorzugten Ausführungsbeispiel auf 40 Zentimeter begrenzt ist, ergeben sich konstruktive Einschränkungen. Diese sind abhängig von der Entwurfsüberfallhöhe $h_E$ zwischen dem höchsten Punkt 15 der Standardprofilkrone 6 und dem oberwasserseitigen Wasserspiegel sowie der Breite l der Breit-Wehrkrone 7. Wenn der Abstand c zwischen der Oberflächenebene 9 und dem höchsten Punkt 15 größer wird, muß folglich die Breite l kleiner werden.

Bevorzugte Wehrhöhen von Entlastungsbauwerken liegen im Bereich zwischen 0,8 und 1,5 Meter. Dadurch ergeben sich im Entwurfsüberfallhöhenbereich zwischen 10 und 15 Zentimeter Grenzverhältnisse für den Quotienten $h_E/w$.

4

$$\left(\frac{h_E}{w}\right)_{min} = 0,07$$

beziehungweise

$$\left(\frac{h_E}{w}\right)_{max} = 0,19.$$

In der nachfolgenden Tabelle sind Überfallbeiwerte $\mu$ und Werte der Q/h-Kennlinie entsprechend der Poleni-Formel der erfindungsgemäßen Überlaufschwelle 3 dargestellt. Zwischenwerte können durch Interpollation ermittelt werden.

| $h$ [cm] | $\dfrac{h}{h_E}$ | $\mu$ | $Q$ [l/s] |
|---|---|---|---|
| 2 | 0,2 | 0,618 | 5 |
| 4 | 0,4 | 0,655 | 15 |
| 6 | 0,6 | 0,688 | 29 |
| 8 | 0,8 | 0,720 | 48 |
| 10 | 1,0 | 0,747 | 69 |
| 12 | 1,2 | 0,764 | 94 |
| 14 | 1,4 | 0,783 | 121 |
| 18 | 1,8 | 0,764 | 172 |
| 22 | 2,2 | 0,708 | 215 |
| 24 | 2,4 | 0,672 | 233 |
| 25 | 2,5 | 0,652 | 240 |

Einwandfreie Meßergebnisse lassen sich im Meßbereich zwischen annähernd 0 und dem 2,5-fachen des Entwurfsfalles erzielen. Bei einem angenommenen Entwurfsfall von $h_E$ = 10 Zentimetern und einer Schwellenhohe von 1 Meter liegt ein gesicherter Meßbereich zwischen 0 und 25 Zentimeter Überfallhöhe entsprechend einer Entlastungsmenge zwischen 0 und 240 Liter pro Sekunde und laufendem Meter Schwellenlängserstreckung vor. Der dabei auftretende Fehler liegt zwischen 2,5 und 5%, abhängig von der Überfallhöhe h.

Durch Veränderung des Entwurfüberfalls lassen sich bei etwa gleichem Fehler größere Wassermengen gemäß der folgenden Tabelle abschlagen.

| Entwurfsüberfallhöhe | Überfallhohenbereich | Entlastungsmengen | Schwellenbreite $l_1$ |
|---|---|---|---|
| 10 cm | 0 - 25 cm | 0 - 240 l/sm | 37 cm |
| 12 cm | 0 - 30 cm | 0 - 320 l/sm | 40 cm |
| 15 cm | 0 - 37,5 cm | 0 - 440 l/sm | 45 cm |
| 20 cm | 0 - 50 cm | 0 - 680 l/sm | 50 cm |

Niedrigere Überlaufschwellen 3 als 0,8 Meter bewirken eine Verbesserung des Entlastungsvermögens bei etwa gleichem Fehler. Höhere Überlaufschwellen 3 als 1,5 Meter bedeuten keine Veränderung der Kennlinie beziehungsweise der Tabellenwerte.

Bei besonders langen Schwellen empfiehlt sich eine größere Meßstellenzahl, also der Einsatz mehrerer Wasserstandsmesser, in Verbindung mit einer Mittelwertbildung. Dabei sollte auch am Anfang und am Ende des Wehrs gemessen werden.

# EP 0 477 745 B1

## Patentansprüche

1. Meßeinrichtung mit Überlaufmeßschwelle (3), die ein Kronenprofil aufweist und deren Meßwert von der von der Meßeinrichtung ermittelten Höhe eines Flüssigkeitsspiegels abhängig ist, **dadurch gekennzeichnet**, daß sich das Kronenprofil aus der Kombination einer Standardprofilkrone (6) und einer sich an deren Abflußrücken (8) anschließenden, waagerecht verlaufenden, sich bis zu einer Wehrrückwand (14) erstreckenden Breit-Wehrkrone (7) zusammensetzt, wobei die Oberflächenebene (9) der Breit-Wehrkrone (7) unterhalb des höchsten Punktes (15) der Standardprofilkrone (6) liegt.

2. Meßeinrichtung mit Überlaufmeßschwelle nach Anspruch 1, **dadurch gekennzeichnet**, daß der Übergang (10) von dem Abflußrücken (8) zur Oberflächenebene (9) der Breit-Wehrkrone (7) stetig, insbesondere als konkave Krümmung (11), ausgebildet ist.

3. Meßeinrichtung mit Überlaufmeßschwelle nach einem der vorhergehenden Ansprüche, **dadurch gekennzeichnet**, daß die Standardprofilkrone (6) oberwasseseitig eine senkrechte Stauwand (12) aufweist.

4. Meßeinrichtung mit Überlaufmeßschwelle nach einem der vorhergehenden Ansprüche, **dadurch gekennzeichnet**, daß die Breit-Wehrkrone (7) unterwasserseitig eine scharfe Kante (13) aufweist.

5. Meßeinrichtung mit Überlaufmeßschwelle nach Anspruch 4, **dadurch gekennzeichnet**, daß die scharfe Kante (13) an die senkrechte Wehrrückwand (14) angrenzt.

6. Meßeinrichtung mit Überlaufmeßschwelle nach einem der vorhergehenden Ansprüche, **dadurch gekennzeichnet**, daß die Form der Standardprofilkrone (6) der Nachbildung der Strahlunterseite eines belüfteten, scharfkantigen Überfalls entspricht.

7. Meßeinrichtung mit Überlaufmeßschwelle nach einem der vorhergehenden Ansprüche, **dadurch gekennzeichnet**, daß die Breite (a) der Standardprofilkrone (6) etwa ebensogroß ist, wie die Breite (b) der Breit-Wehrkrone (7).

8. Meßeinrichtung mit Überlaufmeßschwelle nach einem der vorhergehenden Ansprüche, **dadurch gekennzeichnet**, daß sich die Überlaufmenge nach der Poleni-Formel

$$Q = \tfrac{2}{3} \mu \sqrt{(2\,g)}\; b\; h^{3/2},$$

bestimmt, wobei $\mu$ der Überfallbeiwert der Überlaufschwelle (3), g die Erdbeschleunigung, b die Breite der Überlaufschwelle (3) und h der oberwasserseitige Wasserstand oberhalb des höchsten Punktes (15) der Standardprofilkrone (6) ist und jeder Überlaufhöhe ein eigener Überfallbeiwert $\mu$ zugeordnet ist.

## Claims

1. A measuring device having an overflow measuring barrier (3) which has a crest profile and the reading from which is dependent on a liquid level determined by the measuring device, characterised in that the crest profile is a combination of a standard profile crest (6) and a broad weir crest (7) adjoining the run-off flank (8) of the said standard profile crest (6) and extending horizontally as far as a weir back wall (14), the surface plane (9) of the broad weir crest (7) lying below the highest point (15) of the standard profile crest (6).

2. A measuring device having an overflow measuring barrier according to claim 1, characterised in that the transition region (10) between the run-off flank (8) and the surface plane (9) of the broad weir crest (7) is formed continuously, in particular as a concave curve (11).

3. A measuring device having an overflow measuring barrier according to either one of the preceding claims, characterised in that the standard profile crest (6) has a vertical damming wall (12) at the headwater end.

6

4. A measuring device having an overflow measuring barrier according to any one of the preceding claims, characterised in that the broad weir crest (7) has a sharp edge (13) at the tail-water end.

5. A measuring device having an overflow measuring barrier according to claim 4, characterised in that the sharp edge (13) is adjacent to the vertical weir back wall (14).

6. A measuring device having an overflow measuring barrier according to any one of the preceding claims, characterised in that the shape of the standard profile crest (6) corresponds to the simulation of the stream underside of an aerated, sharp-edged overfall.

7. A measuring device having an overflow measuring barrier according to any one of the preceding claims, characterised in that the breadth (a) of the standard profile crest (6) is approximately equal to the breadth (b) of the broad weir crest (7).

8. A measuring device having an overflow measuring barrier according to any one of the preceding claims, characterised in that the overflow quantity is determined according to the Poleni formula:

$$Q = \tfrac{2}{3} \mu \sqrt{(2g)} \; b \; h^{3/2}$$

where $\mu$ is the overfall coefficient of the overflow barrier (3), g is the acceleration due to gravity, b is the breadth of the overflow barrier (3) and h is the water level at the head-water end above the highest point (15) of the standard profile crest (6), and a separate overfall coefficient $\mu$ is associated with each overflow level.

**Revendications**

1. Dispositif de mesure avec un seuil de mesure (3) immergé qui comporte un profil de couronnement et dont la valeur de mesure dépend du niveau, déterminé par le dispositif de mesure, de la surface d'un liquide, dispositif de mesure caractérisé en ce que le profil de couronnement se compose de la combinaison d'un couronnement de profil standard (6) et d'un large couronnement de déversoir (7) se raccordant à la partie dorsale d'écoulement (8) de ce profil standard et s'étendant horizontalement, qui se prolonge jusqu'à une paroi arrière (14) de déversoir, tandis que la surface supérieure plane (9) du large couronnement de déversoir (7) se situe au-dessous du point le plus élevé (15) du couronnement de profil standard (6).

2. Dispositif de mesure avec un seuil de mesure immergé selon la revendication 1, caractérisé en ce que la transition (10) entre la partie dorsale d'écoulement (8) et la surface supérieure plane (9) du large couronnement de déversoir (7) a une conformation continue, notamment sous la forme d'une courbure concave (11).

3. Dispositif de mesure avec un seuil de mesure immergé selon l'une des précédentes revendications, caractérisé en ce que le couronnement de profil standard (6) comporte du côté amont une paroi de retenue (12) verticale.

4. Dispositif de mesure avec un seuil de mesure immergé selon l'une des précédentes revendications, caractérisé en ce que le large couronnement de déversoir (7) comporte du côté aval une arête vive (13).

5. Dispositif de mesure avec un seuil de mesure immergé selon la revendication 4, caractérisé en ce que l'arête vive (13) est limitrophe de la paroi arrière verticale (14) du déversoir.

6. Dispositif de mesure avec un seuil de mesure immergé selon l'une des précédentes revendications, caractérisé en ce que la forme du couronnement de profil standard (6) correspond à la reproduction de la face inférieure de la veine d'un déversoir aéré à arête vive.

7. Dispositif de mesure avec un seuil de mesure immergé selon l'une des précédentes revendications, caractérisé en ce que la largeur (a) du couronnement de profil standard (6) est à peu près aussi grande que la largeur (b) du large couronnement de déversoir (7).

7

**8.** Dispositif de mesure avec un seuil de mesure immergé selon l'une des précédentes revendications, caractérisé en ce que la quantité de dépassement est déterminée selon la formule de Poleni :

$$Q = \frac{2}{3} \mu \sqrt{(2g)} \, bh^{3/2}$$

dans laquelle $\mu$ est le facteur de correction de dépassement du seuil immergé (3), g l'accélération de la pesanteur, b la largeur du seuil immergé (3) et h le niveau de l'eau au-dessus du point le plus élevé (15) du couronnement de profil standard (6), et à chaque hauteur de dépassement est associé un facteur de correction de dépassement $\mu$ particulier.

Fig. 1

Fig. 2

EP 0 477 745 B1